# EUROPEAN PATENT SPECIFICATION

(11) **EP 2 409 932 B1**
(45) Date of publication and mention of the grant of the patent: **08.05.2013**
(21) Application number: 10753150.1
(22) Date of filing: 16.03.2010
(51) Int. Cl.: B65D 85/804, B65D 81/00, A47J 31/00

(54) **PRODUCT-CONTAINING CAPSULE FOR MAKING INFUSIONS**
PRODUKTHALTIGE KAPSEL ZUR HERSTELLUNG VON AUFGUSSETRÄNKEN
CAPSULE CONTENANT UN PRODUIT POUR L'OBTENTION D'INFUSIONS

(30) Priority: 16.03.2009 ES 200900721
(43) Date of publication of application: 25.01.2012
(73) Proprietor: Isluce, S.L., 01139 Sarria (Alava) (ES)
(72) Inventor: LAFUENTE URQUIZA, José Ignacio, E-01139 SARRIA (ALAVA) (ES)
(74) Representative: Pons Ariño, Angel
(86) International application number: PCT/ES2010/000104
(87) International publication number: WO 2010/106202

(56) References cited:
- EP-A1- 1 344 722
- EP-A2- 1 975 087
- WO-A1-2008/132571
- ES-A1- 2 085 823
- ES-T3- 2 225 333
- ES-T3- 2 290 573
- US-A1- 2005 166 763
- US-A1- 2006 236 871
- US-A1- 2008 028 946

## Description

### FIELD OF THE INVENTION

The present invention relates to a product-containing capsule for obtaining infusions, particularly a one-dose capsule for obtaining coffee infusions containing a certain amount of ground coffee wherefrom the infusion is obtained using the corresponding machine.

These machines have a capsule-receiving chamber which contains the ground coffee and means for injecting water into said capsule, at high pressure and temperature which, after passing through the coffee paste, flows out in the form of an infusion.

### BACKGROUND OF THE INVENTION

Capsules containing ground coffee for preparing coffee infusions, generally cylinder-shaped and hermetically sealed, are known in the state of the art. EP 1 344 722 A1 discloses a capsule according to the preamble of claim 1.

Also known are capsules wherein the infusion flows out through a strip that seals the lower base of the capsule.

### DESCRIPTION OF THE INVENTION

The object of the present invention is a capsule for the expounded purpose, constituted in such a manner as to oblige the pressurised water not to immediately exit the capsule, producing a pre-extraction that moistens the coffee in a practically uniform manner, thereby ensuring the maximum extraction and quality of the infusion.

According to the invention, the capsule comprises a dual-wall pan, for example manufactured from plastic material, the open lower base of which is sealed by an impermeable strip manufactured, for example, from a complex which can be formed from aluminium-plastic or plastic-plastic, which is joined to the outer wall but not to the edge of the inner wall. For its part, the sealed upper base incorporates a two-way valve that opens outwards as a result of an overpressure created in the interior of the capsule. The two walls of the pan are joined together by an intermediate wall which has easy-to-pierce weakened zones and delimits two opposing ring-shaped grooves against the walls of the capsule, which are open in a different direction, one upper groove and one lower groove.

In the previously described constitution, the lower part of the outer wall will project outwards in relation to the inner wall, whereupon the lower edge of said inner wall will remain slightly retracted and separated from the impermeable strip that seals the lower base and which is fixed to the free lower edge of the outer wall.

As regards the two-way valve, it is manufactured from elastically deformable material and is mounted on a central orifice having a reinforced rim of the sealed upper base of the pan. This valve is seated internally on the upper base of the capsule, said base having radial grooves disposed along the seating area that will define the infusion outflow path upon creating an overpressure in the interior of the capsule.

In the capsule of the invention, water is injected at high pressure and temperature through the easy-to-pierce weakened zones of the intermediate partition wall that joins the two capsule walls, reaching the lower groove, wherefrom it passes to the interior of the capsule, through the separation between the lower edge of the inner wall of the capsule and the strip that seals the lower base of said capsule, reaching the interior of the capsule to extend along the perimeter thereof and rise through the ground product contained inside the capsule, until reaching the upper two-way valve where, due to the overpressure, it will flow out through the grooves of the inner bearing surface of the sealed upper base of said capsule, finally flowing out between the core of the valve and the perimeter of the opening whereon said valve is mounted.

### BRIEF DESCRIPTION OF THE DRAWINGS

A form of embodiment of a product-containing capsule for obtaining infusions, constituted in accordance with the invention, is shown in the attached drawings, wherein:
Figure 1 shows an upper perspective of the capsule of the invention.
Figure 2 shows a diametrical cross-section of the same capsule, taken along line 11-11 of figure 1.
Figure 3 shows an upper plan view of the valve included in the capsule of the invention.
Figure 4 shows a diametrical cross-section of the valve, taken along line IV-IV of figure 3.

### DETAILED DESCRIPTION OF AN EMBODIMENT

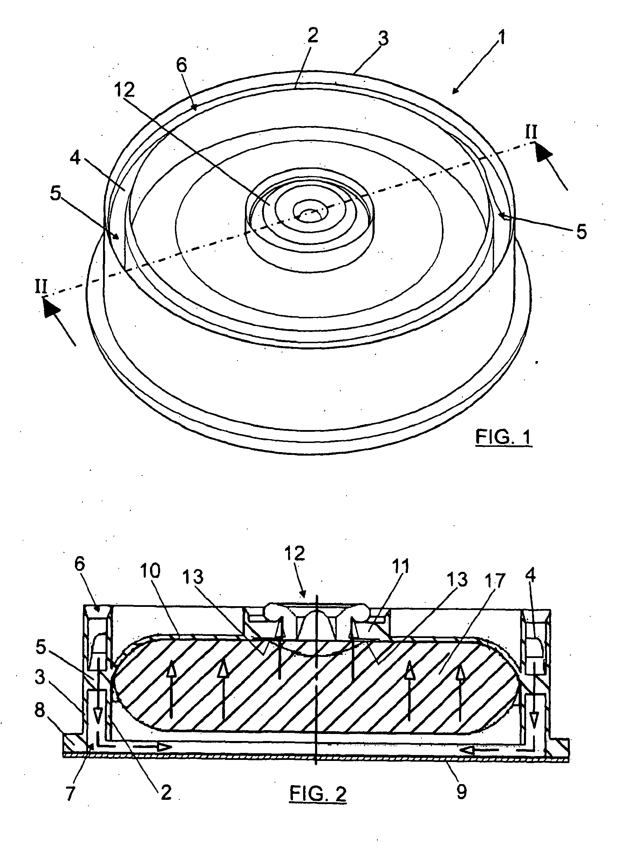

Figure 1 shows a perspective view of a capsule containing a product wherefrom an infusion is obtained using the corresponding machine.

Said capsule, as can be observed in figures 1 and 2, comprises a pan having two coaxial walls, an inner wall (2) and an outer wall (3), which are joined together by an intermediate partition wall (4) having thinner zones (5) that determine easy-to-pierce weakened zones.

The partition wall (4) delimits two opposing grooves against the walls (2) (3), an upper groove (6) and a lower groove (7) which are open in different directions.

A portion of the lower part of the outer wall (3) projects outwards in relation to the free lower edge of the inner wall (2) which can end in a widening or overthickness (8) to facilitate fixation of an impermeable sealing strip (9). The upper base (10) of the capsule is sealed and has a central orifice with a reinforced edge (11) whereon a two-way valve (12) is mounted. This valve is seated on the inner surface of the sealed upper base (10) in an area with small radial grooves (13), wherethrough the infusion flows out, as will be expounded later.

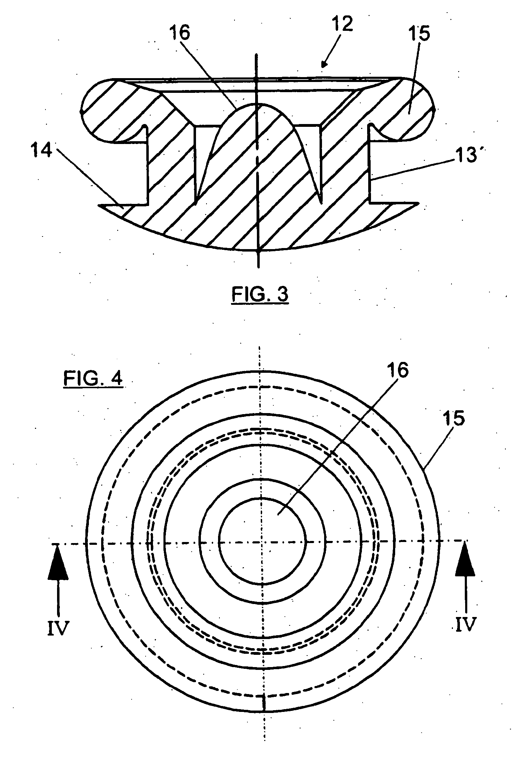

The valve (12) is represented in figures 3 and 4 and has an intermediate neck 13' which will be tightly coupled to the edge of the opening defined by the reinforced rim (11), a base (14) that rests upon the inner surface of the sealed base (10) of the capsule, figure 2, and an upper closing ring (15) that rests externally on the reinforced rim (11) of the upper base (10) of the capsule. The two-way valve (12) can be manufactured from rubber, in such a manner that, if necessary, it can be pierced through the central core (16) using a tubular needle, for example to achieve a vacuum or inject nitrogen into the capsule 1, once filled with the product (17), for example ground coffee, for obtaining an infusion, converting the capsule into a pressurised container.

With the described constitution, water is injected at high pressure and temperature through the weakened zones (5) of the partition wall (4) using the corresponding machine, as represented by the corresponding arrows in figure 2. The water passes underneath the lower edge of the inner wall (2) of the capsule, reaching the interior thereof and rising through the coffee paste (17) until reaching the upper base thereof. The overpressure created inside the capsule causes this pressurised water or steam, already condensed, to flow out through the grooves (13) and between the neck 13' of the valve (12) and the perimeter of the reinforced edge (11) of the upper base (10) of the capsule, slightly separating the closing ring (15), finally flowing out of the upper part around the valve (12). The path covered by the water or steam at high pressure and temperature is represented by arrows in figure 2.

The impermeable strip (9) that seals the lower base of the capsule can be manufactured, for example, from aluminium, while the capsule casing can be manufactured from plastic material and the valve from rubber.

## Claims

1. Product-containing capsule for obtaining infusions, **characterised in that** it comprises a dual-wall pan, the open lower base of which is sealed by means of an impermeable strip (9) that is joined to the edge of the outer wall (3), but not to the edge of the inner wall (2), the sealed upper base of which incorporates a two-way valve (12) that opens outwards as a result of an overpressure created inside the capsule; the two walls of the capsule being joined by an intermediate partition wall having weakened zones (5) which delimits two opposing ring-shaped grooves (6, 7) against the walls of the capsule, which are open in a different direction, one upper groove (6) and one lower groove (7).

2. Capsule, in accordance with claim 1, **characterised in that** the lower part (8) of the outer wall projects outwards in relation to the inner wall, whereupon the lower edge of said inner wall is slightly separated from the impermeable strip fixed to the free edge of the outer wall.

3. Capsule, in accordance with claim 1, **characterised in that** the aforementioned two-way valve (12) is elastically deformable in nature and is mounted on a central orifice of the sealed upper base of the pan having a reinforced edge (11).

4. Capsule, in accordance with claim 1, **characterised in that** the impermeable strip that seals the lower base of the capsule is an aluminium-plastic or plastic-plastic complex.

## Patentansprüche

1. Eine Produkt enthaltene Kapsel zum Erhalt von Aufgüssen, **dadurch gekennzeichnet, dass** sie eine doppelwandige Schale umfasst, wobei deren offene untere Basis mittels eines impermeablen Streifens (9) abgedichtet ist, der mit der Ecke der Außenwand (3), jedoch nicht mit der Ecke der Innenwand (2) verbunden ist, wobei die abgedichtete obere Basis ein Wechselventil (12) umfasst, das sich infolge von Überdruck, der im Innern der Kapsel entsteht, nach außen öffnet; wobei die beiden Wände der Kapsel durch eine dazwischen liegende Trennwand miteinander verbunden sind, welche über geschwächte Zonen (5) verfügt, die die beiden gegenüber liegenden ringförmigen Rillen (6,7) gegen die Wände der Kapsel begrenzen, die in unterschiedlichen Richtungen geöffnet sind, eine obere Rille (6) und eine untere Rille (7).

2. Kapsel nach Anspruch 1, **dadurch gekennzeichnet, dass** der untere Teil (8) der Außenwand in Bezug auf die Innenwand nach außen übersteht, wobei die untere Ecke der besagten Innenwand leicht getrennt ist von dem impermeablen Streifen, der an der freien Ecke der Außenwand befestigt ist.

3. Kapsel nach Anspruch 1, **dadurch gekennzeichnet, dass** das zuvor genannte Wechselventil (12) von Natur aus elastisch deformierbar ist und auf einer mittigen Öffnung der abgedichteten oberen Basis der Schale, die über eine verstärkte Ecke (11) verfügt, montiert ist.

4. Kapsel nach Anspruch 1, **dadurch gekennzeichnet, dass** der impermeable Streifen, der die unter Basis der Kapsel abdichtet, ein Aluminium-Kunststoff oder Kunststoff-Kunststoff-Komplex ist.

## Revendications

1. Capsule contenant un produit pour l'obtention d'infusions, **caractérisée en ce qu'**elle est constituée d'un réceptacle à double paroi, dont la base inférieure ouverte est scellée au moyen d'une bande imperméable (9) qui est jointe au bord de la paroi externe (3), mais pas au bord de la paroi interne (2), dont la base supérieure scellée comporte un distributeur à deux voies (12) qui s'ouvre sur l'extérieur sous l'effet d'une surpression créée à l'intérieur de la capsule ; les deux parois de la capsule étant jointes par une cloison intermédiaire possédant des zones fragilisées (5) qui délimite deux rainures en forme d'anneau opposées (6, 7) contre les parois de la capsule, qui sont ouvertes dans un sens différent, une rainure supérieure (6) et une rainure inférieure (7).

2. Capsule, selon la revendication 1, **caractérisée en ce que** la partie inférieure (8) de la paroi externe se projette vers l'extérieur par rapport à la paroi interne, sur laquelle le bord inférieur de ladite paroi interne est légèrement séparé de la bande imperméable fixée au bord libre de la paroi externe.

3. Capsule, selon la revendication 1, **caractérisée en ce que** le distributeur à deux voies (12) susmentionné est déformable élastiquement de par sa nature et monté sur un orifice central de la base supérieure scellée du réceptacle possédant un bord renforcé (11).

4. Capsule, selon la revendication 1, **caractérisée en ce que** la bande imperméable qui scelle la base inférieure de la capsule est un complexe aluminium-plastique ou plastique-plastique.
